(19) Europäisches Patentamt
European Patent Office
Office européen des brevets

(11) EP 4 293 075 A1

(12) EUROPEAN PATENT APPLICATION
published in accordance with Art. 153(4) EPC

(43) Date of publication:
**20.12.2023 Bulletin 2023/51**

(21) Application number: **22911758.5**

(22) Date of filing: **14.12.2022**

(51) International Patent Classification (IPC):
***C08K 5/372*** *(2006.01)* ***C08K 5/521*** *(2006.01)*
***C08K 3/16*** *(2006.01)* ***C08L 33/06*** *(2006.01)*
***C08J 3/24*** *(2006.01)*

(52) Cooperative Patent Classification (CPC):
**C08J 3/24; C08K 3/16; C08K 5/372; C08K 5/521; C08L 33/06**

(86) International application number:
**PCT/KR2022/020322**

(87) International publication number:
**WO 2023/121125 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.12.2021 KR 20210182480**
**09.12.2022 KR 20220171681**

(71) Applicant: **LG Chem, Ltd.**
**Seoul 07336 (KR)**

(72) Inventors:
- **MIN, Ji Hong**
  **Daejeon 34122 (KR)**
- **KIM, Jun Kyu**
  **Daejeon 34122 (KR)**
- **CHOI, Hyungsam**
  **Daejeon 34122 (KR)**

(74) Representative: **Plasseraud IP**
**66, rue de la Chaussée d'Antin**
**75440 Paris Cedex 09 (FR)**

# (54) COMPOSITION OF SUPER ABSORBENT POLYMER AND PREPARATION METHOD THEREOF

(57) According to the composition of super absorbent polymer and preparation method thereof according to the present disclosure, by mixing deodorization material with super absorbent polymer while controlling combination and mixing ratios thereof, the composition has excellent deodorization performance while minimizing property deterioration of super absorbent polymer.

EP 4 293 075 A1

## Description

## [TECHNICAL FIELD]

CROSS-REFERENCE TO RELATED APPLICATION(S)

This application claims the benefit of Korean Patent Application No. 10-2021-0182480 filed on December 20, 2021 and Korean Patent Application No. 10-2022-0171681 filed on December 9, 2022 with the Korean Intellectual Property Office, the disclosures of which are herein incorporated by reference in their entirety.

The present disclosure relates to a composition of super absorbent polymer and a preparation method thereof. Specifically, the present disclosure relates to a composition of super absorbent polymer having deodorization performance and odor-prevention performance and a preparation method thereof.

## [BACKGROUND ART]

Super absorbent polymer (SAP) is synthetic polymer material that can absorb moisture of 500 to 1000 times of self-weight, and is also named differently as super absorbency material (SAM), absorbent gel material (AGM), etc. according to developing companies. The superabsorbent polymer began to be commercialized as sanitary items, and currently, it is being widely used as water-holding material for soil, water stop material for civil engineering and architecture, sheets for raising seedling, freshness preservatives in the field of food circulation, fomentation material, etc., besides hygienic goods such as a disposable diaper for children, and the like.

In most cases, such superabsorbent polymer is being widely used in the field of hygienic goods such as diapers or sanitary pad, and the like. In the hygienic goods, the superabsorbent polymer is generally spread in pulp and included. However, recently, in an effort to provide hygienic goods such as diapers having thinner thickness, development of diapers having decreased pulp content, or even pulpless diapers in which pulp is not used at all, is being actively progressed.

As such, in the case of hygienic goods having decreased pulp, or pulpless hygienic goods, superabsorbent polymer is included at relatively high ratio, and such superabsorbent polymer particles are included inevitably in multilayers. In order for the entire superabsorbent polymer particles included in multilayers to more efficiently absorb liquid such as urine, the superabsorbent polymer should basically exhibit high absorption performance and absorption speed. Moreover, absorbed liquid should not be leaked even under external pressure, and besides, the superabsorbent polymer should have permeability so as to properly maintain the original shape even when it absorbs liquid and is swollen.

Thus, a lot of researches are being progressed, such as surface crosslinking, for improving basic absorption force and water holding capacity.

However, super absorbent polymer may be used in hygienic products, and in this case, due to the odor of absorbed liquids such as excretion of human and pet, afterfeel may be degraded. Thus, there is an increasing demand for inhibition of odor of super absorbent polymer, as well as basic properties such as absorption force and water holding capacity. Thus, there is a demand for the preparation of super absorbent polymer having deodorization performance.

## [DETAILED DESCRIPTION OF THE INVENTION]

### [Technical Problem]

It is an object of the invention to provide a composition of super absorbent polymer having deodorization performance and a method for preparing the same.

More specifically, it is an object of the invention to provide a composition of super absorbent polymer and a method for preparing the same, said composition having excellent deodorization performance while minimizing property deterioration of super absorbent polymer, by mixing deodorization material with super absorbent polymer while controlling combination and mixing ratios thereof.

### [Technical Solution]

In order to achieve the object, there is provided a composition of super absorbent polymer comprising:

> super absorbent polymer comprising a base resin comprising crosslinked polymer in which acrylic acid-based monomers having at least partially neutralized acid groups and an internal crosslinking agent are crosslinked, and a surface crosslink layer formed on the surface of the base resin, in which the crosslinked polymer is additionally crosslinked by a surface crosslinking agent; and

sulfur-containing amino acid and metal iodide salt.

There is also provided a method for preparing a composition of super absorbent polymer, comprising steps of:

conducting crosslinking polymerization of acrylic acid-based monomers having at least partially neutralized acid groups, in the presence of an internal crosslinking agent and a polymerization initiator, to form hydrogel polymer (step 1);
preparing a base resin comprising crosslinked polymer by drying and grinding the hydrogel polymer (step 2);
mixing a surface crosslinking solution with the base resin to prepare a mixture (step 3);
heat treating the mixture to prepare super absorbent polymer in which a surface crosslink layer is formed on the surface of the base resin(step 4); and
mixing an aqueous solution comprising sulfur-containing amino acid and metal iodide salt with the super absorbent polymer (step 5).

## [ADVANTAGEOUS EFFECTS]

As explained above, the present disclosure provides a composition of super absorbent polymer having excellent deodorization performance, and a preparation method thereof, by applying optimum rates of deodorization materials to super absorbent polymer.

## [DETAILED DESCRIPTION OF THE EMBODIMENTS]

The terms used herein are only to explain specific embodiments, and are not intended to limit the invention. A singular expression includes a plural expression thereof, unless it is expressly stated or obvious from the context that such is not intended. As used herein, the terms "comprise", "equipped" or "have", etc. are intended to designate the existence of practiced characteristic, number, step, constructional element or combinations thereof, and they are not intended to preclude the possibility of existence or addition of one or more other characteristics, numbers, steps, constructional elements or combinations thereof.

Although various modifications can be made to the invention and the invention may have various forms, specific examples will be illustrated and explained in detail below. However, it should be understood that these are not intended to limit the invention to specific disclosure, and that the invention includes all the modifications, equivalents or replacements thereof without departing from the spirit and technical scope of the invention.

Hereinafter, a composition of super absorbent polymer and a preparation method thereof according to specific embodiments of the invention will be explained more detail.

But first, technical terms used herein are only for mentioning specific embodiments, and are not intended to limit the invention. And, the singular expressions used herein include the plural expressions thereof, unless they are differently expressed contextually.

For reference, as used herein, "super absorbent polymer" means super absorbent polymer itself, or is used to include the polymer made suitable for productization through additional processes, for example, surface crosslinking, fine reassembly, drying, grinding, classification, and the like, according to the context.

And, as used herein, "base resin" or "base resin powder" means particle or powder obtained by drying and grinding polymer polymerized from acrylic acid-based monomers, before passing through surface modification or surface crosslinking step as described below.

### (Composition of super absorbent polymer)

According to one embodiment of the invention, there is provided a composition of super absorbent polymer.

The composition of super absorbent polymer comprises: super absorbent polymer comprising a base resin comprising crosslinked polymer in which acrylic acid-based monomers having at least partially neutralized acid groups and an internal crosslinking agent are crosslinked, and a surface crosslink layer formed on the surface of the base resin, in which the crosslinked polymer is additionally crosslinked by a surface crosslinking agent; and sulfur-containing amino acid and metal iodide salt.

The acrylic acid-based monomers may be any monomers commonly used in the preparation of superabsorbent polymer. As non-limiting examples, the acrylic acid-based monomer may be a compound represented by the following Chemical Formula 1:

[Chemical Formula 1] $R^1\text{-COOM}^1$

In the Chemical Formula 1,

$R_1$ is a C2-5 alkyl group comprising an unsaturated bond,
$M^1$ is a hydrogen atom, a monovalent or divalent metal, an ammonium group or an organic amine salt.

Preferably, the monomers may be one or more selected from the group consisting of acrylic acid, methacrylic acid, and monovalent metal salts, divalent metal salts, ammonium salts and organic amine salts thereof.
The acrylic acid-based monomers may have acid groups, and at least a part of the acid groups may be neutralized. Preferably, the monomers partially neutralized with alkali substance such as sodium hydroxide, potassium hydroxide, ammonium hydroxide and the like, may be used.
Wherein, the degree of neutralization of the monomers may be 40 to 95 mol%, or 40 to 80 mol%, or 45 to 75 mol%. Although the range of the neutralization degree may vary according to the final properties, if the neutralization degree is too high, neutralized monomers may be precipitated, and thus, it may be difficult to smoothly progress polymerization, and to the contrary, if the neutralization degree is too low, absorption force of polymer may be significantly lowered, and it may exhibit elastic rubber-like properties, which is difficult to handle.
Meanwhile, the crosslinking polymerization is conducted in the presence of a crosslinking agent("internal crosslinking agent") so as to improve the properties of polymer obtained by the polymerization of the acrylic acid-based monomers. The crosslinking agent is for internal crosslinking of hydrogel polymer, and is used separately from "a surface crosslinking agent" as described below.
As the internal crosslinking agent, any compounds can be used as long as they enable the introduction of crosslink during polymerization of the acrylic acid-based monomers. As non-limiting examples, as the internal crosslinking agent, multifunctional crosslinking agents such as N,N'-methylenebisacrylamide, trimethylolpropane tri(meth)acrylate, ethyleneglycol di(meth)acrylate, polyethyleneglycol (meth)acrylate, propyleneglycol di(meth)acrylate, polypropyleneglycol (meth)acrylate, butanediol di(meth)acrylate, butyleneglycol di(meth)acrylate, diethyleneglycol di(meth)acrylate, hexanediol di(meth)acrylate, triethyleneglycol di(meth)acrylate, tripropyleneglycol di(meth)acrylate, tetraethyleneglycol di(meth)acrylate, dipentaerythritol pentaacrylate, glycerin tri(meth)acrylate, pentaerythritol tetraacrylate, triarylamine, ethyleneglycol diglycidyl ether, propyleneglycol, glycerin, or ethylenecarbonate may be used alone or in combinations, but it is not limited thereto.
Such an internal crosslinking agent may be used at the concentration of 0.001 to 1 wt%, or 0.01 to 0.8 wt%, or 0.1 to 0.7 wt%, based on the monomer composition. If the concentration of the internal crosslinking agent is too low, absorption speed of polymer may decrease, and gel strength may become weak. To the contrary, if the concentration of the internal crosslinking agent is too high, absorption force of superabsorbent polymer may decrease, and it may not be preferable as an absorbent.
Besides, the monomer composition may further comprise additives such as a thickener, a plasticizer, a preservation stabilizer, an antioxidant, etc., as necessary.
The surface crosslink layer is formed by additional crosslinking of the crosslinked polymer by a surface crosslinking agent, wherein the surface crosslinking agent is not specifically limited as long as it is commonly used for surface crosslinking of super absorbent polymer and is a compound capable of reacting with the functional groups of the polymer.
Preferably, in order to improve the properties of produced super absorbent polymer, as the surface crosslinking agent, one or more selected from the group consisting of polyhydric alcohol compounds; epoxy compounds; polyamine compounds; haloepoxy compounds; condensation products of haloepoxy compounds; oxazoline compounds; mono-, di- or polyoxazolidinone compounds; cyclic urea compounds; multivalent metal salts; and alkylene carbonate compounds may be used.
Specifically, as the examples of the polyhydric alcohol compound, one or more selected from the group consisting of mono-, di-, tri- tetra- or polyethylene glycol, monopropylene glycol, 1,3-propanediol, dipropylene glycol, 2,3,4-trimethyl-1,3-pentanediol, polypropylene glycol, glycerol, polyglycerol, 2-butene-1,4-diol, 1,4-butanediol, 1,3-butanediol, 1,5-pentanediol, 1,6-hexandiol, and 1,2-cyclohexanedimethanol may be used.
And, as the epoxy compound, ethylene glycol diglycidyl ether and glycidol, and the like may be used, and as the polyamine compound, one or more selected from the group consisting of ethylenediamine, diethylenetriamine, triethylenetriamine, tetraethylenepentamine, pentaethylenehexamine, polyethyleneamine, and polyamidepolyamine may be used.
And, as the haloepoxy compound, epichlorohydrin, epibromohydrin, and $\alpha$-methylepichlorohydrin may be used, and as the mono-, di- or polyoxazolidinone compound, for example, 2-oxazolidinone, and the like may be used.
And, as the alkylene carbonate compound, ethylene carbonate, and the like may be used. These compounds may be used alone or in combinations. Meanwhile, in order to increase the efficiency of the surface crosslinking process, among these surface crosslinking agents, one or more kinds of C2-10 polyhydric alcohol compounds may be included.
The content of the surface crosslinking agent added may be appropriately selected according to the kind of the surface crosslinking agent added and reaction conditions, but commonly, it may be used in the amount of about 0.001

to about 5 parts by weight, preferably about 0.01 to about 3 parts by weight, more preferably about 0.05 to about 2 parts by weight, based on 100 parts by weight of the polymer.

If the content of the surface crosslinking agent is too small, a surface crosslinking reaction may hardly occur, and if it is greater than 5 parts by weight, based on 100 parts by weight of the polymer, due to the progression of excessive surface crosslinking reaction, absorption capacity and properties may be deteriorated.

Meanwhile, the surface crosslinking agent may further comprise inorganic materials. As such inorganic material, one or more selected from the group consisting of silica, clay, alumina, silica-alumina composite material, titania, zinc oxide and aluminum sulfate may be used. The inorganic material may be used in the form of powder or liquid, and particularly, alumina powder, silica-alumina powder, titania powder, or a nano silica solution. And, the inorganic material may be used in the content of about 0.001 to about 1 part by weight, based on 100 parts by weight of the base resin.

And, the surface crosslinking agent may further comprise a thickener. If the surface of base resin powder is additionally crosslinked in the presence of a thickener, property deterioration may be minimized even after grinding. Specifically, as the thickener, one or more selected from polysaccharide and hydroxy-containing polymer may be used. As the polysaccharide, a gum-based thickener and a cellulose-based thickener, and the like may be used. As specific examples of the gum-based thickener, xanthan gum, arabic gum, karaya gum, tragacanth gum, ghatti gum, guar gum, locust bean gum and psyllium seed gum, and the like may be mentioned, and as specific examples of the cellulose-based thickener, hyrdoxypropylmethylcellulose, carboxymethylcellulose, methylcellulose, hydroxymethylcellulose, hydroxyethylcellulose, hydroxypropylcellulose, hydroxyethylmethylcellulose, hydroxymethylpropylcellulose, hydroxyethylhydroxypropylcellulose, ethylhydroxyethylcellulose and methylhydroxypropylcellulose, and the like may be mentioned. Meanwhile, as specific examples of the hydroxy-containing polymer, polyethyleneglycol and polyvinylalcohol, and the like may be mentioned.

The sulfur-containing amino acid and metal iodide salt may be included respectively in the content of 0.1 to 1.5 parts by weight and 0.001 to 0.05 parts by weight, based on 100 parts by weight of the base resin. The sulfur-containing amino acid may be added to super absorbent polymer to endow deodorization property. Specifically, the sulfur-containing amino acid may comprise one or more selected from the group consisting of cysteine, cystine, and methionine. More specifically, the sulfur-containing amino acid may comprise cysteine or methionine.

The metal iodide salt has the form in which one or more selected from the group consisting of CuI, NaI and KI are dissolved together with $I_2$ in water. The metal iodide salt may be also added to super absorbent polymer to endow deodorization property, like sulfur-containing amino acid.

The sulfur-containing amino acid may chemically react with malodorous substance to capture it. Malodorous substance generally has low molecular weight, and by the reaction with sulfur-containing amino acid, it may become substance with decreased or no odor, thus effectively removing odor. Particularly, the sulfur-containing amino acid is effective for reducing odors of aldehyde and ketone compounds.

The metal iodide salt oxidizes malodorous substance to remove it, and it acts on most malodorous substances and works in general.

The sulfur-containing amino acid may be included in the content of 0.1 to 1.5 parts by weight, based on 100 parts by weight of the base resin. Specifically, the sulfur-containing amino acid may be included in the content of 0.1 parts by weight or more, 0.13 parts by weight or more, or 0.15 parts by weight or more and 1.5 parts by weight or less, 1.2 parts by weight or less, 1.0 parts by weight or less, 0.8 parts by weight or less, 0.6 parts by weight or less, 0.5 parts by weight or less, 0.4 parts by weight or less, 0.3 parts by weight or less, or 0.2 parts by weight or less.

The metal iodide salt may be included in the content of 0.001 to 0.05 parts by weight, based on 100 parts by weight of the base resin. Specifically, the metal iodide salt may be included in the content of 0.001 parts by weight or more, 0.005 parts by weight or more, 0.01 parts by weight or more, 0.015 parts by weight or more or 0.02 parts by weight or more and 0.05 parts by weight or less, 0.04 parts by weight or less, 0.03 parts by weight or less, or 0.025 parts by weight or less.

If the content of the sulfur-containing amino acid is too small, deodorization property may not be realized, and if it is too large, unique properties of super absorbent polymer may be deteriorated, and there may be a process problem due to incomplete dissolution.

And, if the content of the metal iodide salt is too small, deodorization property may not be sufficiently realized, and if it is too large, unique properties of super absorbent polymer may be deteriorated, and it may be supplied as a solution in the process to increase tailings, and thus, deodorization capacity may decrease to the contrary.

The sulfur-containing amino acid and metal iodide salt are mixed with super absorbent polymer as an aqueous solution in water solvent, and they exist in super absorbent polymer while mixed and physically contained in super absorbent polymer. The metal iodide salt solution may be a solution with solids concentration of 1% or less.

And, the base resin may further comprise polymerizable antibacterial monomers in the content of 5 parts by weight or less, based on 100 parts by weight of the acrylic acid-based monomer, thus endowing super absorbent polymer with antibacterial property as well as deodorization property. The polymerizable antibacterial monomer may be in the form of polymerizable quaternary ammonium salt represented by the following Chemical Formula 2.

[Chemical Formula 2]

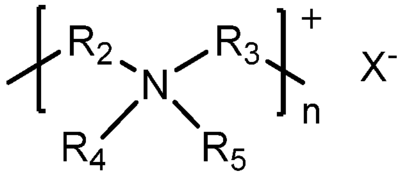

In the Chemical Formula 2, $R_2$ to $R_5$ may be substituted or unsubstituted $C_{1-30}$ alkyl, $C_{1-30}$ alkoxy, $C_{6-30}$ aryl or $C_{5-30}$ heteroaryl comprising one or more selected from the group consisting of N, O and S.

Specifically, the polymerizable quaternary ammonium salt may be one or more selected from the group consisting of cetethyldimonium bromide, myristyl betaine, and octenidine HCl.

And, the polymerizable antibacterial monomers may be included in the content of 0.5 parts by weight or more, 1 part by weight or more, 1.5 parts by weight or more or 1.8 parts by weight or more and 5 parts by weight or less, 4 parts by weight or less, 3 parts by weight or less, or 2 parts by weight or less, based on 100 parts by weight of the acrylic acid-based monomer. In case antibacterial effect is not aimed, polymerizable antibacterial monomers may not be included, but in case antibacterial effect is aimed, the effect cannot be obtained if the content of polymerizable antibacterial monomers mixed is too small. On the other hand, if the content of polymerizable antibacterial monomers is too large, water holding capacity and absorption capacity required for super absorbent polymer may be deteriorated.

And, zirconium phosphate may be further included in the content of 5.0 parts by weight or less, based on 100 parts by weight of the base resin. Wherein, zirconium phosphate may be previously dry mixed in the step of drying and grinding of the base resin. Namely, zirconium phosphate may be physically dry mixed as solid contents with the base resin before surface crosslinking. Zirconium phosphate is material capable of physically adsorbing malodorous substance. Thus, by further mixing base resin powders with zirconium phosphate, additional deodorization effect may be obtained.

Wherein, the zirconium phosphate may be included in the content of 5.0 parts by weight or less, based on 100 parts by weight of the base resin. The zirconium phosphate is for additional deodorization capacity increase, and may not be included, but in case it is included, it may be specifically included in the content of 0.5 parts by weight or more, 0.8 parts by weight or more, 1.0 parts by weight or more, 1.3 parts by weight or more, 1.5 parts by weight or more, or 1.8 parts by weight or more and 5.0 parts by weight or less, 4.0 parts by weight or less, 3.0 parts by weight or less or 2.0 parts by weight or less. If the content of zirconium phosphate mixed is too small, deodorization effect obtained thereby may be insignificant, and if the content is too large, surface crosslinking may not be sufficiently conducted, and thus, absorbency under pressure, and the like may be deteriorated.

And, the surface crosslink layer may further comprise tannin solids. Tannin may chemically bond with volatile malodorous substance such as aldehyde-based material, thus endowing super absorbent polymer with deodorization performance.

The tannin solids may be included in the content of 0.05 parts by weight or less, based on 100 parts by weight of the base resin. The tannin is intended to endow super absorbent polymer with additional deodorization property, and may not be included, but in case it is included, it may be specifically included in the content of 0.005 parts by weight or more, 0.015 parts by weight or more, or 0.025 parts by weight or more and 0.05 parts by weight or less, 0.04 parts by weight or less or 0.03 parts by weight or less, based on 100 parts by weight of the base resin. If the content of tannin mixed is too small, deodorization effect obtained thereby may be insignificant, and if it is too large, the properties of super absorbent polymer, such as absorption capacity, absorbency under pressure, and the like may be deteriorated.

**(Preparation method of composition of super absorbent polymer)**

According to one embodiment of the invention, there is provided a method for preparing a composition of super absorbent polymer.

The method for preparing a composition of superabsorbent polymer comprises steps of:
conducting crosslinking polymerization of acrylic acid-based monomers having at least partially neutralized acid groups, in the presence of an internal crosslinking agent and a polymerization initiator, to form hydrogel polymer; preparing a base resin comprising crosslinked polymer by drying and grinding the hydrogel polymer; mixing a surface crosslinking solution with the base resin to prepare a mixture; heat treating the mixture to prepare super absorbent polymer in which a surface crosslink layer is formed on the surface of the base resin; and mixing an aqueous solution comprising sulfur-containing amino acid and metal iodide salt with the super absorbent polymer.

The method for preparing super absorbent polymer largely comprises a step of polymerizing acrylic acid-based monomers to prepare hydrogel polymer, and a step of grinding it. And, in order to improve various properties of super

absorbent polymer, the surface of prepared super absorbent polymer is crosslinked.

The present disclosure is aimed at providing a composition of super absorbent polymer having deodorization property, by mixing deodorization material with the surface crosslinked super absorbent polymer.

Hereinafter, the invention will be explained in detail according to steps.

**(Step 1)**

The step 1 is a step of preparing hydrogel polymer, and specifically, a step wherein a monomer composition comprising acrylic acid-based monomers having at least partially neutralized acid groups is crosslinked to form hydrogel polymer.

The acrylic acid-based monomers may be any monomers commonly used in the preparation of superabsorbent polymer. Specifically, the acrylic acid-based monomer may be a compound represented by the following Chemical Formula 1:

[Chemical Formula 1] $R^1$-$COOM^1$

In the Chemical Formula 1,

$R_1$ is a C2-5 alkyl group comprising an unsaturated bond,
$M^1$ is a hydrogen atom, a monovalent or divalent metal, an ammonium group or an organic amine salt.

Preferably, the monomers may be one or more selected from the group consisting of acrylic acid, methacrylic acid, and monovalent metal salts, divalent metal salts, ammonium salts and organic amine salts thereof.

The acrylic acid-based monomers may have acid groups, and at least a part of the acid groups may be neutralized. Preferably, the monomers partially neutralized with alkali substance such as sodium hydroxide, potassium hydroxide, ammonium hydroxide and the like, may be used.

Wherein, the degree of neutralization of the monomers may be 40 to 95 mol%, or 40 to 80 mol%, or 45 to 75 mol%. Although the range of the neutralization degree may vary according to the final properties, if the neutralization degree is too high, neutralized monomers may be precipitated, and thus, it may be difficult to smoothly progress polymerization, and to the contrary, if the neutralization degree is too low, absorption force of polymer may be significantly lowered, and it may exhibit elastic rubber-like properties, which is difficult to handle.

And, in the present disclosure, in order to endow super absorbent polymer with antibacterial property as well as deodorization property, polymerizable antibacterial monomers may be further included. Specifically, the polymerizable antibacterial monomers may be included in the content of 5 parts by weight or less, based on 100 parts by weight of the acrylic acid-based monomer. The polymerizable antibacterial monomers may be in the form of polymerizable quaternary ammonium salts represented by the following Chemical Formula 2.

[Chemical Formula 2]

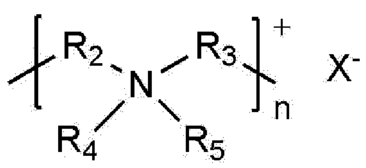

In the Chemical Formula 2, $R_2$ to $R_5$ may be substituted or unsubstituted $C_{1-30}$ alkyl, $C_{1-30}$ alkoxy, $C_{6-30}$ aryl or $C_{5-30}$ heteroaryl comprising one or more selected from the group consisting of N, O and S.

Specifically, the polymerizable quaternary ammonium salt may be one or more selected from the group consisting of cetethyldimonium bromide, myristyl betaine, and octenidine HCl.

And, the polymerizable antibacterial monomers may be included in the content of 0.5 parts by weight or more, 1 part by weight or more, 1.5 parts by weight or more or 1.8 parts by weight or more and 5 parts by weight or less, 4 parts by weight or less, 3 parts by weight or less, or 2 parts by weight or less, based on 100 parts by weight of the acrylic acid-based monomer. In case antibacterial effect is not aimed, polymerizable antibacterial monomers may not be included, but in case antibacterial effect is aimed, the effect cannot be obtained if the content of polymerizable antibacterial monomers mixed is too small. On the other hand, if the content of polymerizable antibacterial monomers is too large, water holding capacity and absorption capacity required for super absorbent polymer may be deteriorated.

In the monomer composition, a polymerization initiator commonly used for the preparation of super absorbent polymer may be included.

As the polymerization initiator, a thermal polymerization initiator or a photopolymeirzation initiator may be used according to polymerization method. However, even when photopolymerization is progressed, since a certain amount of heat is generated by UV irradiation, etc., and heat is generated to some degree according to the progression of an exothermic polymerization reaction, a thermal polymerization initiator may be additionally included.

As the photopolymerization initiator, one or more selected from the group consisting of benzoin ether, dialkyl acetophenone, hydroxyl alkylketone, phenyl glyoxylate, benzyl dimethyl Ketal, acyl phosphine, and $\alpha$-aminoketone may be used. Among them, as specific examples of acyl phosphine, commercially available lucirin TPO, i.e., 2,4,6-trimethyl-benzoyl-trimethyl phosphine oxide may be used. More various photopolymerization initiators are described in Reinhold Schwalm, "UV Coatings: Basics, Recent Developments and New Application(Elsevier 2007)", page 115, which may be referred to.

And, as the thermal polymerization initiator, one or more selected from the group consisting of a persulfate initiator, an azo initiator, hydrogen peroxide, and ascorbic acid may be used. Specific examples of the persulfate initiator may include sodium persulfate ($Na_2S_2O_8$), potassium persulfate ($K_2S_2O_8$), ammonium persulfate ($(NH_4)_2S_2O_8$), etc., and, specific examples of the azo initiator may include 2,2-azobis(2-amidinopropane)dihydrochloride, 2,2-azobis-(N,N-dimethylene)isobutyramidinedihydrochloride, 2-(carbamoylazo)isobutyronitril, 2,2-azobis[2-(2-imidazolin-2-yl)propane] dihydrochloride, 4,4-azobis-(4-cyanovalericacid), etc. More various thermal initiators are described in "Principle of Polymerization (Wiley, 1981)", Odian, page 203, which may be referred to.

Such a polymerization initiator may be added at the concentration of 0.001 to 1 wt%, or 0.005 to 0.1 wt%, based on the monomer composition. If the concentration of the polymerization initiator is too low, polymerization speed may become slow, and remaining monomers may be extracted in a large quantity in the final product. And, if the concentration of the polymerization initiator is too high, polymer chains making up the network of superabsorbent polymer may become short, and thus, extractable contents may increase, and absorbency under pressure of superabsorbent polymer may be lowered, thereby deteriorating the properties of polymer.

Meanwhile, the polymerization of the monomer composition is conducted in the presence of a crosslinking agent("internal crosslinking agent") so as to improve the properties of polymer obtained by the polymerization of the acrylic acid-based monomers. The crosslinking agent is for internal crosslinking of hydrogel polymer, and is used separately from "a surface crosslinking agent" as described below.

As the internal crosslinking agent, any compounds can be used as long as they enable the introduction of crosslink during polymerization of the acrylic acid-based monomers. As non-limiting examples, as the internal crosslinking agent, multifunctional crosslinking agents such as N,N'-methylenebisacrylamide, trimethylolpropane tri(meth)acrylate, ethyleneglycol di(meth)acrylate, polyethyleneglycol (meth)acrylate, propyleneglycol di(meth)acrylate, polypropyleneglycol (meth)acrylate, butanediol di(meth)acrylate, butyleneglycol di(meth)acrylate, diethyleneglycol di(meth)acrylate, hexanediol di(meth)acrylate, triethyleneglycol di(meth)acrylate, tripropyleneglycol di(meth)acrylate, tetraethyleneglycol di(meth)acrylate, dipentaerythritol pentaacrylate, glycerin tri(meth)acrylate, pentaerythritol tetraacrylate, triarylamine, ethyleneglycol diglycidyl ether, propyleneglycol, glycerin, or ethylenecarbonate may be used alone or in combinations, but it is not limited thereto.

Such an internal crosslinking agent may be used at the concentration of 0.001 to 1 wt%, or 0.01 to 0.8 wt%, or 0.1 to 0.7 wt%, based on the monomer composition. If the concentration of the internal crosslinking agent is too low, absorption speed of polymer may decrease, and gel strength may be weak. To the contrary, if the concentration of the internal crosslinking agent is too high, absorption force of superabsorbent polymer may decrease, and it may not be preferable as an absorbent.

And, the crosslinking polymerization of the monomer composition may be conducted in the presence of a blowing agent, according to the necessity and degree of improvement in absorption speed. Such a blowing agent may be decomposed during the crosslinking polymerization reaction and generate gas, thus forming pores in the hydrogel polymer. As the result, when such a blowing agent is additionally used, more developed porous structure is formed in super absorbent polymer, and thus, absorption speed of super absorbent polymer may be further improved.

As non-limiting examples, the blowing agent may comprise one or more compounds selected from the group consisting of sodium bicarbonate, sodium carbonate, potassium bicarbonate, potassium carbonate, calcium bicarbonate, calcium bicarbonate, magnesium bicarbonate, magnesium carbonate, azodicarbonamide (ADCA), dinitroso pentamethylene tetramine(DPT), p,p'-oxybis(benzenesulfonyl hydrazide) (OBSH), p-toluenesulfonyl hydrazide (TSH), sucrose stearate, sucrose palmitate, and sucrose laurate.

The blowing agent may be included in the monomer composition in the content of 1000 to 4000 ppmw, and more specifically, in the content of 1000 ppm or more, or 1100 ppmw or more, or 1200 ppmw or more; and 4000 ppmw or less, or 3500 ppmw or less, or 3000 ppmw or less.

Besides, the monomer composition may further comprise a thickener, a plasticizer, a preservation stabilizer, an antioxidant, and the like, as necessary.

And, the monomer composition may be prepared in the form of a solution in which the above-explained raw materials including acrylic acid-based monomers, polymerization initiator, internal crosslinking agent, blowing agent, and the like are dissolved in a solvent.

Wherein, the solvent that can be used is not limited in terms of its construction as long as it can dissolve the above explained raw materials. For example, as the solvent, water, ethanol, ethyleneglycol, diethyleneglycol, triethyleneglycol, 1,4-butanediol, propyleneglycol, ethyleneglycol monobutyl ether, propyleneglycol monomethyl ether, propyleneglycol monomethyl ether acetate, methylethylketone, acetone, methylamylketone, cyclohexanone, cyclopentanone, diethyleneglycol monomethyl ether, diethyleneglycol ethyl ether, toluene, xylene, butyrolactone, carbitol, methylcellosolve acetate, N,N-dimethylacetamide, or a mixture thereof may be used.

The formation of hydrogel polymer through the polymerization of the monomer composition may be conducted by a common polymerization method, and the process is not specifically limited.

As non-limiting examples, the polymerization method is largely classified into thermal polymerization and photopolymerization according to the kind of energy source, and thermal polymerization may be progressed in a reactor equipped with a stirring axis such as a kneader, and photopolymerization may be progressed in a reactor equipped with a movable conveyer belt.

For example, hydrogel polymer may be obtained by introducing the above-described monomer composition into a reactor such as a kneader equipped with a stirring axis, and supplying hot air or heating the reactor to progress thermal polymerization. Wherein, the hydrogel polymer discharged to the outlet of the reactor may be in the size of a few centimeters to a few millimeters according to the shape of the stirring axis equipped in the reactor. Specifically, the size of obtained hydrogel polymer may vary according to the concentration of the introduced monomer composition and the introduction speed, etc., and commonly, hydrogel polymer with particle diameter of 2 to 50 mm may be obtained.

And, for another example, in case photopolymerization of the monomer composition is progressed in a reactor equipped with a movable conveyer belt as explained above, hydrogel polymer in the form of a sheet may be obtained. Wherein, the thickness of the sheet may vary according to the concentration of the introduced monomer composition and the introduction speed, but commonly, it is preferable that the thickness of the sheet is controlled to 0.5 to 10 cm, so as to enable uniform polymerization of the entire sheet, and simultaneously, secure production speed, and the like.

Hydrogel polymer thus obtained may have a moisture content of 40 to 80 wt%. Wherein, the "moisture content" is the content of moisture occupied based on the total weight of hydrogel polymer, and it means a value obtained by subtracting the weight of polymer of a dry state from the weight of hydrogel polymer. Specifically, it is defined as a value calculated by measuring the weight loss according to moisture evaporation in the polymer while raising the temperature of polymer through infrared heating to dry. Wherein, the temperature is raised from room temperature to about 180°C and then maintained at 180°C, and the total drying time may be set to 20 minutes including a temperature raising step of 5 minutes.

**(Step 2)**

The step 2 of the present disclosure is a step of drying, grinding and classifying the hydrogel polymer prepared in step 1, to form base resin powders.

Specifically, in order to increase drying efficiency of hydrogel polymer and affect the morphology of super absorbent polymer, thus affecting various properties of super absorbent polymer including absorption speed, particularly in order to improve absorption speed of super absorbent polymer, in the present disclosure, a step of coarse grinding may be further included before drying the hydrogel polymer. Hereinafter, in order to distinguish it from grinding after drying, the grinding before drying is referred to as 'coarse grinding' herein for convenience.

The grinder used for the grinding is not limited in terms of its construction, but specifically, it may include anyone selected from the group consisting of vertical pulverizer, turbo cutter, turbo grinder, rotary cutter mill, cutter mill, disc mill, shred crusher, crusher, chopper and disc cutter, but is not limited thereto.

Wherein, the coarse grinding step may be conducted such that the particle diameter of hydrogel polymer may become about 2 mm to about 10 mm. Grinding to particle diameter less than 2 mm would not be technically easy due to high moisture content of hydrogel polymer, and it may cause aggregation between ground particles. Meanwhile, if grinding to particle diameter greater than 10 mm, the effect for increasing the efficiency of the subsequent drying step may be insignificant.

The drying may be conducted at a temperature of 120 to 250°C, 140 to 200°C, or 150 to 190°C. Wherein, the drying temperature may be defined as the temperature of a heat transfer medium supplied for drying or the temperature inside a drying reactor containing a heat transfer medium and polymer in the drying process. If the drying temperature is too low and drying time is lengthened, process efficiency may be deteriorated, and thus, in order to prevent the same, the drying temperature is preferably 120°C or more. And, if the drying temperature is higher than needed, the surface of hydrogel polymer may be excessively dried, and thus, generation of fines may increase in the subsequent grinding step, and the properties of the final polymer may be deteriorated, and thus, in order to prevent the same, the drying

temperature is preferably 250°C or less.

Wherein, the drying time in the drying step is not specifically limited, but considering process efficiency and properties of polymer, and the like, it may be controlled to 20 minutes to 90 minutes under the above-described drying temperature.

The drying may be conducted using a common medium, and for example, the drying may be conducted by hot air supply, infrared irradiation, microwave irradiation or UV irradiation to the ground hydrogel polymer, and the like.

And, preferably, drying is conducted such that dried polymer may have a moisture content of 0.1 to 10 wt%. Namely, in case the moisture content of dried polymer is less than 0.1 wt%, due to excessive drying, production cost may increase and crosslinked polymer may be degraded. And, if the moisture content of dried polymer is greater than 10 wt%, defects may be generated in the subsequent process.

Subsequently, the dried hydrogel polymer may be ground. It is a step for optimizing the surface area of base resin powder and super absorbent polymer. The grinding may be conducted such that the particle diameter of ground polymer may become 150 to 850 $\mu$m.

Wherein, as a grinder, common grinders such as a pin mill, a hammer mill, a screw mill, a roll mill, a disc mill, a jog mill, and the like may be used.

And, in order to manage the properties of the finally productized super absorbent polymer, a step of selectively classifying particles having particle diameter range of 150 to 850 $\mu$m in the polymer particles obtained through the grinding step, is conducted.

Passing through the classification step, base resin powders may be obtained. Such base resin powders may have particle diameter range of 150 to 850 $\mu$m, and may comprise fines with particle diameter less than 150 $\mu$m in the content of 2 wt% or less, or 1 wt% or less.

And, after base resin powder are obtained by drying and grinding, a step of mixing zirconium phosphate may be further included. Wherein, zirconium phosphate may be previously dry mixed. Namely, zirconium phosphate may be physically dry mixed as solid contents with the base resin before surface crosslinking. Zirconium phosphate is material capable of physically adsorbing malodorous substance. Thus, by further mixing base resin powders with zirconium phosphate, additional deodorization effect may be obtained.

Wherein, the zirconium phosphate may be included in the content of 5.0 parts by weight or less, based on 100 parts by weight of the base resin. The zirconium phosphate is for additional deodorization capacity increase, and may not be included, but in case it is included, it may be specifically included in the content of 0.5 parts by weight or more, 0.8 parts by weight or more, 1.0 parts by weight or more, 1.3 parts by weight or more, 1.5 parts by weight or more, or 1.8 parts by weight or more and 5.0 parts by weight or less, 4.0 parts by weight or less, 3.0 parts by weight or less or 2.0 parts by weight or less. If the content of zirconium phosphate mixed is too small, deodorization effect obtained thereby may be insignificant, and if the content is too large, surface crosslinking may not be sufficiently conducted, and thus, absorption under pressure, and the like may be deteriorated.

**(Step 3)**

The step 3 of the present disclosure is a step of mixing the base resin powders prepared in the step 2 with a surface crosslinking solution.

The surface crosslinking solution used in step 3 comprises a surface crosslinking agent, and the surface crosslinking agent is not specifically limited as long as it is commonly used for surface crosslinking of super absorbent polymer and is a compound capable of reacting with the functional groups of the polymer.

Preferably, in order to improve the properties of product super absorbent polymer, as the surface crosslinking agent, one or more selected from the group consisting of polyhydric alcohol compounds; epoxy compounds; polyamine compounds; haloepoxy compounds; condensation products of haloepoxy compounds; oxazoline compounds; mono-, di- or polyoxazolidinone compounds; cyclic urea compounds; multivalent metal salts; and alkylene carbonate compounds may be used.

Specifically, as the examples of the polyhydric alcohol compound, one or more selected from the group consisting of mono-, di-, tri- tetra- or polyethylene glycol, monopropylene glycol, 1,3-propanediol, dipropylene glycol, 2,3,4-trimethyl-1,3-pentanediol, polypropylene glycol, glycerol, polyglycerol, 2-butene-1,4-diol, 1,4-butanediol, 1,3-butanediol, 1,5-pentanediol, 1,6-hexandiol, and 1,2-cyclohexanedimethanol may be used.

And, as the epoxy compound, ethylene glycol diglycidyl ether and glycidol, and the like may be used, and as the polyamine compound, one or more selected from the group consisting of ethylenediamine, diethylenetriamine, triethylenetriamine, tetraethylenepentamine, pentaethylenehexamine, polyethyleneamine, and polyamidepolyamine may be used.

And, as the haloepoxy compound, epichlorohydrin, epibromohydrin, and $\alpha$-methylepichlorohydrin may be used, and as the mono-, di- or polyoxazolidinone compound, for example, 2-oxazolidinone, and the like may be used.

And, as the alkylene carbonate compound, ethylene carbonate, and the like may be used. These compounds

may be used alone or in combinations. Meanwhile, in order to increase the efficiency of the surface crosslinking process, among these surface crosslinking agents, one or more kinds of C2-10 polyhydric alcohol compounds may be included.

The content of the surface crosslinking agent added may be appropriately selected according to the kind of the surface crosslinking agent added and reaction conditions, but commonly, it may be about 0.001 to about 5 parts by weight, preferably about 0.01 to about 3 parts by weight, more preferably about 0.05 to about 2 parts by weight, based on 100 parts by weight of the polymer.

If the content of the surface crosslinking agent is too small, a surface crosslinking reaction may hardly occur, and if it is greater than 5 parts by weight, based on 100 parts by weight of the polymer, due to the progression of excessive surface crosslinking reaction, absorption capacity and properties may be deteriorated.

Meanwhile, the step of forming a surface crosslink layer may be conducted while the surface crosslinking solution further comprises inorganic materials. As such inorganic material, one or more selected from the group consisting of silica, clay, alumina, silica-alumina composite material, titania, zinc oxide and aluminum sulfate may be used. The inorganic material may be used in the form of powder or liquid, and particularly, alumina powder, silica-alumina powder, titania powder, or a nano silica solution. And, the inorganic material may be used in the content of about 0.001 to about 1 part by weight, based on 100 parts by weight of the base resin.

And, the surface crosslinking solution may further comprise a thickener. If the surface of base resin powder is additionally crosslinked in the presence of a thickener, property deterioration may be minimized even after grinding. Specifically, as the thickener, one or more selected from polysaccharide and hydroxy-containing polymer may be used. As the polysaccharide, gum-based thickener and cellulose-based thickener, and the like may be used. As specific examples of the gum-based thickener, xanthan gum, arabic gum, karaya gum, tragacanth gum, ghatti gum, guar gum, locust bean gum and psyllium seed gum, and the like may be mentioned, and as specific examples of the cellulose-based thickener, hyrdoxypropylmethylcellulose, carboxymethylcellulose, methylcellulose, hydroxymethylcellulose, hydroxyethylcellulose, hydroxypropylcellulose, hydroxyethylmethylcellulose, hydroxymethylpropylcellulose, hydroxyethylhydroxypropylcellulose, ethylhydroxyethylcellulose and methylhydroxypropylcellulose, and the like may be mentioned. Meanwhile, as specific examples of the hydroxy-containing polymer, polyethyleneglycol and polyvinylalcohol, and the like may be mentioned.

And, the surface crosslinking solution may further comprise a tannin solution, besides the surface crosslinking agent. Tannin may chemically bond with volatile malodorous substances such as aldehyde-based materials, thus endowing super absorbent polymer with deodorization performance.

The tannin solution may be included in the content of 1.0 part by weight or less, based on 100 parts by weight of the base resin. The tannin is intended to endow super absorbent polymer with additional deodorization property, and may not be included, but in case it is included, it may be specifically included in the content of 0.1 parts by weight or more, 0.3 parts by weight or more, or 0.5 parts by weight or more and 1.0 parts by weight or less, 0.8 parts by weight or less or 0.6 parts by weight or less, based on 100 parts by weight of the base resin. If the content of tannin mixed is too small, deodorization effect obtained thereby may be insignificant, and if it is too large, the properties of super absorbent polymer, such as absorption capacity, absorpbency under pressure, and the like may be deteriorated. Wherein, the solids concentration of the tannin solution may be 0.1 wt% or more to 5 wt% or less.

Specifically, the tannin solids content may be 0.005 parts by weight or more, 0.015 parts by weight or more, or 0.025 parts by weight or more and 0.05 parts by weight or less, 0.04 parts by weight or less or 0.03 parts by weight or less, based on 100 parts by weight of the base resin.

Meanwhile, a method for mixing the base resin with the surface crosslinking solution may be appropriately selected without specific limitations, as long as it can uniformly mix them.

For example, a method of putting the surface crosslinking solution and the base resin in a reactor and mixing them, a method of spraying the surface crosslinking solution to the base resin, a method of continuously feeding the base resin and the surface crosslinking solution to a continuously operated mixer and mixed, and the like may be used.

Wherein, the surface crosslinking solution may be a solution, and in case the solid content in the solution is 1 wt% or more, 3 wt% or more, 5 wt% or more, 10 wt% or more, and 50 wt% or less, 30 wt% or less, or 20 wt% or less, it may be appropriately to uniformly disperse in the base resin, and simultaneously agglomeration of the base resin may be prevented.

**(Step 4)**

The step 4 is a step of reacting the base resin with the surface crosslinking solution to form an interpenetrating polymer network on the surface of the crosslinked polymer included in the base resin, thereby further improving the properties of super absorbent polymer. Through such surface modification, on the surface of the ground base resin particles, a surface crosslink layer is formed.

The formation of the surface crosslink layer may be conducted by a common method of increasing the crosslinking density of polymer particle surface, and for example, it may be conducted by mixing the ground polymer with a

surface crosslinking solution comprising a surface crosslinking agent, and heat treating the mixture to conduct a crosslink reaction.

The step 4 may be conducted at a temperature of about 80°C to about 250°C. More specifically, the surface crosslinking process may be conducted at a temperature of about 100°C to about 220°C, or about 110°C to about 200°C, or about 120°C to about 190°C, for about 10 minutes to about 2 hours, or about 20 minutes to about 60 minutes. If the crosslinking reaction temperature is less than 160°C or the reaction time is too short, a surface crosslinking reaction may not sufficiently occur, and thus, penetration degree may be lowered, and if the crosslinking reaction temperature is greater than 200°C or the reaction time is too long, centrifuge retention capacity may be lowered.

A temperature rise means for the surface crosslinking reaction is not specifically limited. A heat transfer medium may be supplied, or a heat source may be directly supplied for heating. Wherein, as the kind of heat transfer media that can be used, temperature-increased fluids such as steam, hot air, hot oil, and the like may be used, but the invention is not limited thereto, and the temperature of heat transfer medium supplied may be appropriately selected considering the means of heat transfer medium, temperature rise means, and target temperature. Meanwhile, as the heat source directly supplied, electric heating, and gas heating may be mentioned, but the invention is not limited thereto.

**(Step 5)**

The step 5 is a step of mixing the super absorbent polymer in which a surface crosslink layer is formed on the base resin, with a solution comprising sulfur-containing amino acid and metal iodide salt. Namely, the step 5 is a step of mixing super absorbent polymer with a solution comprising sulfur-containing amino acid and metal iodide salt, to obtain a composition of super absorbent polymer.

The sulfur-containing amino acid may be added to super absorbent polymer to endow deodorization property. Specifically, the sulfur-containing amino acid may comprise one or more selected from the group consisting of cysteine, cystine, and methionine. More specifically, the sulfur-containing amino acid may comprise cysteine or methionine.

The metal iodide salt has the form in which one or more selected from the group consisting of CuI, NaI and KI are dissolved together with $I_2$ in water. The metal iodide salt may be also added to super absorbent polymer to endow deodorization property, like sulfur-containing amino acid.

The sulfur-containing amino acid may chemically react with malodorous substance to capture it. Malodorous substance generally has low molecular weight, and by the reaction with sulfur-containing amino acid, it may become substance with decreased or no odor, thus effectively removing odor. Particularly, the sulfur-containing amino acid is effective for reducing odors of aldehyde and ketone compounds.

The metal iodide salt acts on most malodorous substances and works in general, by oxidizing malodorous substance to remove it.

The sulfur-containing amino acid may be included in the content of 0.1 to 1.5 parts by weight, based on 100 parts by weight of the base resin. Specifically, the sulfur-containing amino acid may be included in the content of 0.1 parts by weight or more, 0.13 parts by weight or more, or 0.15 parts by weight or more and 1.5 parts by weight or less, 1.2 parts by weight or less, 1.0 parts by weight or less, 0.8 parts by weight or less, 0.6 parts by weight or less, 0.5 parts by weight or less, 0.4 parts by weight or less, 0.3 parts by weight or less, or 0.2 parts by weight or less.

The metal iodide salt solution may be included in the content of 0.1 to 5.0 parts by weight, based on 100 parts by weight of the base resin. Specifically, the metal iodide salt solution may be included in the content of 0.1 parts by weight or more, 0.5 parts by weight or more, 1.0 part by weight or more, 1.5 parts by weight or more or 2.0 parts by weight or more and 5.0 parts by weight or less, 4.0 parts by weight or less, 3.0 parts by weight or less, or 2.5 parts by weight or less. And, the metal iodide salt solution may be a solution with solids concentration of 1% or less.

Specifically, the metal iodide salt may be included in the content of 0.001 parts by weight or more, 0.005 parts by weight or more, 0.01 parts by weight or more, 0.015 parts by weight or more or 0.02 parts by weight or more and 0.05 parts by weight or less, 0.04 parts by weight or less, 0.03 parts by weight or less, or 0.025 parts by weight or less.

If the content of the sulfur-containing amino acid is too small, deodorization property may not be realized, and if it is too large, unique properties of super absorbent polymer may be deteriorated, and there may be a process problem due to incomplete dissolution.

And, if the content of the metal iodide salt is too small, deodorization property may not be sufficiently realized, and if it is too large, unique properties of super absorbent polymer may be deteriorated, and it may be supplied as a solution in the process to increase tailings, and deodorization capacity may decrease to the contrary.

The sulfur-containing amino acid and metal iodide salt are mixed with super absorbent polymer as an aqueous solution in water solvent, and they exist in super absorbent polymer while being mixed and physically contained in super absorbent polymer.

After the step of mixing super absorbent polymer including a surface crosslink layer with an aqueous solution comprising sulfur-containing amino acid and metal iodide salt (hydration and post-addition step), a drying step may be further conducted.

Hereinafter, preferable examples are presented for better understanding of the invention. However, the following examples are presented only as the illustrations of the invention, and are not intended to limit the invention.

**Comparative Example 1**

100 g of acrylic acid, 0.37 g of N,N'-methylenebisacrylamide as a crosslinking agent, 0.15 g of sodium persulfate(SPS) as a thermal initiator, 0.008 g of benzoin ether as UV initiator, 40 g of caustic soda(NaOH), and 127 g of water were mixed, to prepare an aqueous monomer composition with a monomer concentration of 45.8 wt%. The aqueous monomer composition was introduced into a feed section of a polymerization reactor equipped with a continuously moving conveyor belt, and then, while maintaining a polymerization atmosphere temperature of 80°C, UV was irradiated with a UV irradiation device (dose: 10 $mW/cm^2$), and UV polymerization was progressed for 2 minutes, thus preparing hydrogel polymer.

The hydrogel polymer was transferred to a meat chopper and cut to 2 mm to 10 mm. Wherein, the moisture content of cut hydrogel polymer was 47 wt%. Subsequently, the hydrogel polymer was dried in a hot air dryer of 170°C for 30 minutes, and the dried hydrogel polymer was ground with a pin mill. Subsequently, polymers having a particle size range of 150 $\mu$m to 850 $\mu$m were classified with a sieve to prepare a base resin.

And then, to 100 parts by weight of the above-prepared base resin, a surface crosslinking solution (2.5 parts by weight of water, 0.1 parts by weight of ethyleneglycol diglycidyl ether(EX-810), 0.1 parts by weight of aluminum sulfate 18 hydrate(Al-S), and 0.1 parts by weight of silica(Aerosil A200)) was uniformly mixed, and then, a surface crosslinking reaction was progressed at 140°C for 30 minutes. After completing the surface treatment, by classification with a sieve, super absorbent polymer with a particle diameter range of 150 to 850 $\mu$m was obtained.

**Comparative Example 2**

100 g of acrylic acid, 0.37 g of N,N'-methylenebisacrylamide as a crosslinking agent, 0.15 g of sodium persulfate(SPS) as a thermal initiator, 0.008 g of benzoin ether as UV initiator, 40 g of caustic soda(NaOH), and 127 g of water were mixed, to prepare an aqueous monomer composition with a monomer concentration of 45.8 wt%. The aqueous monomer composition was introduced into a feed section of a polymerization reactor equipped with a continuously moving conveyor belt, and then, while maintaining a polymerization atmosphere temperature of 80°C, UV was irradiated with a UV irradiation device (dose: 10 $mW/cm^2$), and UV polymerization was progressed for 2 minutes, thus preparing hydrogel polymer.

The hydrogel polymer was transferred to a meat chopper and cut to 2 mm to 10 mm. Wherein, the moisture content of cut hydrogel polymer was 47 wt%. Subsequently, the hydrogel polymer was dried in a hot air dryer of 170°C for 30 minutes, and the dried hydrogel polymer was ground with a pin mill. Subsequently, polymers having a particle size range of 150 $\mu$m to 850 $\mu$m were classified with a sieve to prepare a base resin.

And then, to 100 parts by weight of the above-prepared base resin, a surface crosslinking solution (2.5 parts by weight of water, 0.1 parts by weight of ethyleneglycol diglycidyl ether(EX-810), 0.1 parts by weight of aluminum sulfate 18 hydrate(Al-S), and 0.1 parts by weight of silica(Aerosil A200)) was uniformly mixed, and then, a surface crosslinking reaction was progressed at 140°C for 30 minutes. After completing the surface treatment, by classification with a sieve, super absorbent polymer with a particle diameter range of 150 to 850 $\mu$m was obtained.

The obtained super absorbent polymer was mixed an aqueous cysteine solution (cysteine concentration 13 wt%). Wherein, they were mixed such that the content of cysteine became 0.1 parts by weight, based on 100 parts by weight of base resin. And then, a drying step was conducted at 80°C for 25 minutes.

**Comparative Example 3**

100 g of acrylic acid, 0.37 g of N,N'-methylenebisacrylamide as a crosslinking agent, 0.15 g of sodium persulfate(SPS) as a thermal initiator, 0.008 g of benzoin ether as UV initiator, 40 g of caustic soda(NaOH), and 127 g of water were mixed, to prepare an aqueous monomer composition with a monomer concentration of 45.8 wt%. The aqueous monomer composition was introduced into a feed section of a polymerization reactor equipped with a continuously moving conveyor belt, and then, while maintaining a polymerization atmosphere temperature of 80°C, UV was irradiated with a UV irradiation device(dose: 10 $mW/cm^2$), and UV polymerization was progressed for 2 minutes, thus preparing hydrogel polymer.

The hydrogel polymer was transferred to a meat chopper and cut to 2 mm to 10 mm. Wherein, the moisture content of cut hydrogel polymer was 47 wt%. Subsequently, the hydrogel polymer was dried in a hot air dryer of 170°C for 30 minutes, and the dried hydrogel polymer was ground with a pin mill. Subsequently, polymers having a particle size range of 150 $\mu$m to 850 $\mu$m were classified with a sieve to prepare a base resin.

And then, to 100 parts by weight of the above-prepared base resin, a surface crosslinking solution (2.5 parts

by weight of water, 0.1 parts by weight of ethyleneglycol diglycidyl ether(EX-810), 0.1 parts by weight of aluminum sulfate 18 hydrate(Al-S), and 0.1 parts by weight of silica(Aerosil A200)) was uniformly mixed, and then, a surface crosslinking reaction was progressed at 140°C for 30 minutes. After completing the surface treatment, by classification with a sieve, super absorbent polymer with a particle diameter range of 150 to 850 $\mu$m was obtained.

The obtained super absorbent polymer was mixed with an aqueous CuI solution (CuI concentration 1 wt%). Wherein, they were mixed such that the content of CuI became 0.02 parts by weight, based on 100 parts by weight of base resin. And then, a drying step was conducted at 80°C for 25 minutes.

**Comparative Example 4**

100 g of acrylic acid, 0.37 g of N,N'-methylenebisacrylamide as a crosslinking agent, 0.15 g of sodium persulfate(SPS) as a thermal initiator, 0.008 g of benzoin ether as UV initiator, 40 g of caustic soda(NaOH), and 127 g of water were mixed, to prepare an aqueous monomer composition with a monomer concentration of 45.8 wt%. The aqueous monomer composition was introduced into a feed section of a polymerization reactor equipped with a continuously moving conveyor belt, and then, while maintaining a polymerization atmosphere temperature of 80°C, UV was irradiated with a UV irradiation device (dose: 10 mW/cm$^2$), and UV polymerization was progressed for 2 minutes, thus preparing hydrogel polymer.

The hydrogel polymer was transferred to a meat chopper and cut to 2 mm to 10 mm. Wherein, the moisture content of cut hydrogel polymer was 47 wt%. Subsequently, the hydrogel polymer was dried in a hot air dryer of 170°C for 30 minutes, and the dried hydrogel polymer was ground with a pin mill. Subsequently, polymers having a particle size range of 150 $\mu$m to 850 $\mu$m were classified with a sieve to prepare a base resin.

And then, to 100 parts by weight of the above-prepared base resin, a surface crosslinking solution (2.5 parts by weight of water, 0.1 parts by weight of ethyleneglycol diglycidyl ether(EX-810), 0.1 parts by weight of aluminum sulfate 18 hydrate(Al-S), and 0.1 parts by weight of silica(Aerosil A200)) was uniformly mixed, and then, a surface crosslinking reaction was progressed at 140°C for 30 minutes. After completing the surface treatment, by classification with a sieve, super absorbent polymer with a particle diameter range of 150 to 850 $\mu$m was obtained.

The obtained super absorbent polymer was dry mixed with Beta-cyclodextrin in the content of 1.0 part by weight, based on 100 parts by weight of super absorbent polymer.

**Comparative Example 5**

100 g of acrylic acid, 0.37 g of N,N'-methylenebisacrylamide as a crosslinking agent, 0.15 g of sodium persulfate(SPS) as a thermal initiator, 0.008 g of benzoin ether as UV initiator, 40 g of caustic soda(NaOH), and 127 g of water were mixed, to prepare an aqueous monomer composition with a monomer concentration of 45.8 wt%. The aqueous monomer composition was introduced into a feed section of a polymerization reactor equipped with a continuously moving conveyor belt, and then, while maintaining a polymerization atmosphere temperature of 80°C, UV was irradiated with a UV irradiation device(dose: 10 mW/cm$^2$), and UV polymerization was progressed for 2 minutes, thus preparing hydrogel polymer.

The hydrogel polymer was transferred to a meat chopper and cut to 2 mm to 10 mm. Wherein, the moisture content of cut hydrogel polymer was 47 wt%. Subsequently, the hydrogel polymer was dried in a hot air dryer of 170°C for 30 minutes, and the dried hydrogel polymer was ground with a pin mill. Subsequently, polymers having a particle size range of 150 $\mu$m to 850 $\mu$m were classified with a sieve to prepare a base resin.

And then, before surface crosslinking, the base resin powders were dry mixed with zirconium phosphate. The zirconium phosphate was mixed in the content of 2.0 parts by weight, based on 100 parts by weight of base resin.

And then, to 100 parts by weight of the base resin mixed with zirconium phosphate, a surface crosslinking solution (2.5 parts by weight of water, 0.1 parts by weight of ethyleneglycol diglycidyl ether(EX-810), 0.1 parts by weight of aluminum sulfate 18 hydrate(Al-S), and 0.1 parts by weight of silica(Aerosil A200)) was uniformly mixed, and then, a surface crosslinking reaction was progressed at 140°C for 30 minutes. After completing the surface treatment, by classification with a sieve, super absorbent polymer with a particle diameter range of 150 to 850 $\mu$m was obtained.

**Comparative Example 6**

100 g of acrylic acid, 0.37 g of N,N'-methylenebisacrylamide as a crosslinking agent, 0.15 g of sodium persulfate(SPS) as a thermal initiator, 0.008 g of benzoin ether as UV initiator, 40 g of caustic soda(NaOH), and 127 g of water were mixed, to prepare an aqueous monomer composition with a monomer concentration of 45.8 wt%. The aqueous monomer composition was introduced into a feed section of a polymerization reactor equipped with a continuously moving conveyor belt, and then, while maintaining a polymerization atmosphere temperature of 80°C, UV was irradiated with a UV irradiation device(dose: 10 mW/cm$^2$), and UV polymerization was progressed for 2 minutes, thus preparing

hydrogel polymer.

The hydrogel polymer was transferred to a meat chopper and cut to 2 mm to 10 mm. Wherein, the moisture content of cut hydrogel polymer was 47 wt%. Subsequently, the hydrogel polymer was dried in a hot air dryer of 170°C for 30 minutes, and the dried hydrogel polymer was ground with a pin mill. Subsequently, polymers having a particle size range of 150 $\mu$m to 850 $\mu$m were classified with a sieve to prepare a base resin.

And then, to 100 parts by weight of the above-prepared base resin, a surface crosslinking solution (2.5 parts by weight of water, 0.1 parts by weight of ethyleneglycol diglycidyl ether(EX-810), 0.1 parts by weight of aluminum sulfate 18 hydrate(Al-S), and 0.1 parts by weight of silica(Aerosil A200)) and a tannin solution were uniformly mixed, and then, a surface crosslinking reaction was progressed at 140°C for 30 minutes. As the tannin solution, an aqueous solution with a solid content of 5 parts by weight, based on 100 parts by weight of the solution, was used. The tannin solution was mixed in the content of 0.05 parts by weight, based on 100 parts by weight of base resin. After completing the surface treatment, by classification with a sieve, super absorbent polymer with a particle diameter range of 150 to 850 $\mu$m was obtained.

**Example 1**

100 g of acrylic acid, 0.37 g of N,N'-methylenebisacrylamide as a crosslinking agent, 0.15 g of sodium persulfate(SPS) as a thermal initiator, 0.008 g of benzoin ether as UV initiator, 40 g of caustic soda(NaOH), and 127 g of water were mixed, to prepare an aqueous monomer composition with a monomer concentration of 45.8 wt%. The aqueous monomer composition was introduced into a feed section of a polymerization reactor equipped with a continuously moving conveyor belt, and then, while maintaining a polymerization atmosphere temperature of 80°C, UV was irradiated with a UV irradiation device(dose: 10 $mW/cm^2$), and UV polymerization was progressed for 2 minutes, thus preparing hydrogel polymer.

The hydrogel polymer was transferred to a meat chopper and cut to 2 mm to 10 mm. Wherein, the moisture content of cut hydrogel polymer was 47 wt%. Subsequently, the hydrogel polymer was dried in a hot air dryer of 170°C for 30 minutes, and the dried hydrogel polymer was ground with a pin mill. Subsequently, polymers having a particle size range of 150 $\mu$m to 850 $\mu$m were classified with a sieve to prepare a base resin.

And then, to 100 parts by weight of the above-prepared base resin, a surface crosslinking solution (2.5 parts by weight of water, 0.1 parts by weight of ethyleneglycol diglycidyl ether(EX-810), 0.1 parts by weight of aluminum sulfate 18 hydrate(Al-S), and 0.1 parts by weight of silica(Aerosil A200)) was uniformly mixed, and then, a surface crosslinking reaction was progressed at 140°C for 30 minutes. After completing the surface treatment, by classification with a sieve, super absorbent polymer with a particle diameter range of 150 to 850 $\mu$m was obtained.

The obtained super absorbent polymer was mixed with an aqueous cysteine solution (cysteine concentration 13 wt%) and an aqueous CuI solution (CuI concentration 1 wt%). Wherein, they were mixed such that the content of cysteine became 0.1 parts by weight, based on 100 parts by weight of base resin, and the content of CuI became 0.02 parts by weight, based on 100 parts by weight of base resin. And then, a drying step was conducted at 80°C for 25 minutes.

**Example 2**

100 g of acrylic acid, 0.37 g of N,N'-methylenebisacrylamide as a crosslinking agent, 0.15 g of sodium persulfate(SPS) as a thermal initiator, 0.008 g of benzoin ether as UV initiator, 40 g of caustic soda(NaOH), and 127 g of water were mixed, to prepare an aqueous monomer composition with a monomer concentration of 45.8 wt%. The aqueous monomer composition was introduced into a feed section of a polymerization reactor equipped with a continuously moving conveyor belt, and then, while maintaining a polymerization atmosphere temperature of 80°C, UV was irradiated with a UV irradiation device (dose: 10 $mW/cm^2$), and UV polymerization was progressed for 2 minutes, thus preparing hydrogel polymer.

The hydrogel polymer was transferred to a meat chopper and cut to 2 mm to 10 mm. Wherein, the moisture content of cut hydrogel polymer was 47 wt%. Subsequently, the hydrogel polymer was dried in a hot air dryer of 170°C for 30 minutes, and the dried hydrogel polymer was ground with a pin mill. Subsequently, polymers having a particle size range of 150 $\mu$m to 850 $\mu$m were classified with a sieve to prepare a base resin.

And then, to 100 parts by weight of the above-prepared base resin, a surface crosslinking solution (2.5 parts by weight of water, 0.1 parts by weight of ethyleneglycol diglycidyl ether(EX-810), 0.1 parts by weight of aluminum sulfate 18 hydrate(Al-S), and 0.1 parts by weight of silica(Aerosil A200)) was uniformly mixed, and then, a surface crosslinking reaction was progressed at 140°C for 30 minutes. After completing the surface treatment, by classification with a sieve, super absorbent polymer with a particle diameter range of 150 to 850 $\mu$m was obtained.

The obtained super absorbent polymer was mixed with an aqueous cysteine solution (cysteine concentration 13 wt%) and an aqueous CuI solution (CuI concentration 1 wt%) were mixed. Wherein, they were mixed such that the content of cysteine became 0.15 parts by weight, based on 100 parts by weight of base resin, and the content of CuI

became 0.01 parts by weight, based on 100 parts by weight of base resin. And then, a drying step was conducted at 80°C for 25 minutes.

**Example 3**

100 g of acrylic acid, 0.37 g of N,N'-methylenebisacrylamide as a crosslinking agent, 0.15 g of sodium persulfate(SPS) as a thermal initiator, 0.008 g of benzoin ether as UV initiator, 40 g of caustic soda(NaOH), and 127 g of water were mixed, to prepare an aqueous monomer composition with a monomer concentration of 45.8 wt%. The aqueous monomer composition was introduced into a feed section of a polymerization reactor equipped with a continuously moving conveyor belt, and then, while maintaining a polymerization atmosphere temperature of 80°C, UV was irradiated with a UV irradiation device (dose: 10 $mW/cm^2$), and UV polymerization was progressed for 2 minutes, thus preparing hydrogel polymer.

The hydrogel polymer was transferred to a meat chopper and cut to 2 mm to 10 mm. Wherein, the moisture content of cut hydrogel polymer was 47 wt%. Subsequently, the hydrogel polymer was dried in a hot air dryer of 170°C for 30 minutes, and the dried hydrogel polymer was ground with a pin mill. Subsequently, polymers having a particle size range of 150 $\mu$m to 850 $\mu$m were classified with a sieve to prepare a base resin.

And then, to 100 parts by weight of the above-prepared base resin, a surface crosslinking solution (2.5 parts by weight of water, 0.1 parts by weight of ethyleneglycol diglycidyl ether(EX-810), 0.1 parts by weight of aluminum sulfate 18 hydrate(Al-S), and 0.1 parts by weight of silica(Aerosil A200)) was uniformly mixed, and then, a surface crosslinking reaction was progressed at 140°C for 30 minutes. After completing the surface treatment, by classification with a sieve, super absorbent polymer with a particle diameter range of 150 to 850 $\mu$m was obtained.

The obtained super absorbent polymer was mixed with an aqueous cysteine solution (cysteine concentration 13 wt%) and an aqueous CuI solution (CuI concentration 1 wt%). Wherein, they were mixed such that the content of cysteine became 0.3 parts by weight, based on 100 parts by weight of base resin, and the content of CuI became 0.001 parts by weight, based on 100 parts by weight of base resin. And then, a drying step was conducted at 80°C for 25 minutes.

**Example 4**

100 g of acrylic acid, 1.0 g of cetethyldimonium bromide as polymerizable antibacterial monomers, 0.37 g of N,N'-methylenebisacrylamide as a crosslinking agent, 0.15 g of sodium persulfate(SPS) as a thermal initiator, 0.008 g of benzoin ether as UV initiator, 40 g of caustic soda(NaOH), and 127 g of water were mixed, to prepare an aqueous monomer composition with a monomer concentration of 45.8 wt%. The aqueous monomer composition was introduced into a feed section of a polymerization reactor equipped with a continuously moving conveyor belt, and then, while maintaining a polymerization atmosphere temperature of 80°C, UV was irradiated with a UV irradiation device (dose: 10 $mW/cm^2$), and UV polymerization was progressed for 2 minutes, thus preparing hydrogel polymer.

The hydrogel polymer was transferred to a meat chopper and cut to 2 mm to 10 mm. Wherein, the moisture content of cut hydrogel polymer was 47 wt%. Subsequently, the hydrogel polymer was dried in a hot air dryer of 170°C for 30 minutes, and the dried hydrogel polymer was ground with a pin mill. Subsequently, polymers having a particle size range of 150 $\mu$m to 850 $\mu$m were classified with a sieve to prepare a base resin.

And then, before surface crosslinking, the base resin powders were mixed with zirconium phosphate. The zirconium phosphate was mixed such that the content became 2.0 parts by weight, based on 100 parts by weight of the base resin.

And then, to 100 parts by weight of the above-prepared base resin, a surface crosslinking solution (2.5 parts by weight of water, 0.1 parts by weight of ethyleneglycol diglycidyl ether(EX-810), 0.1 parts by weight of aluminum sulfate 18 hydrate(Al-S), and 0.1 parts by weight of silica(Aerosil A200)) and a tannin solution were uniformly mixed, and then, a surface crosslinking reaction was progressed at 140°C for 30 minutes. As the tannin solution, an aqueous solution with a tannin solid content of 5 parts by weight, based on 100 parts by weight of the solution, was used. The tannin solution was mixed in the solid content of 0.05 parts by weight, based on 100 parts by weight of base resin. After completing the surface treatment, by classification with a sieve, super absorbent polymer with a particle diameter range of 150 to 850 $\mu$m was obtained.

The obtained super absorbent polymer was mixed with an aqueous cysteine solution (cysteine concentration 13 wt%) and an aqueous CuI solution (CuI concentration 1 wt%). Wherein, they were mixed such that the content of cysteine became 0.15 parts by weight, based on 100 parts by weight of base resin, and the content of CuI became 0.01 parts by weight, based on 100 parts by weight of base resin. And then, a drying step was conducted at 80°C for 25 minutes.

**Example 5**

100 g of acrylic acid, 0.5 g of cetethyldimonium bromide as polymerizable antibacterial monomers, 0.37 g of

N,N'-methylenebisacrylamide as a crosslinking agent, 0.15 g of sodium persulfate(SPS) as a thermal initiator, 0.008 g of benzoin ether as UV initiator, 40 g of caustic soda(NaOH), and 127 g of water were mixed, to prepare an aqueous monomer composition with a monomer concentration of 45.8 wt%. The aqueous monomer composition was introduced into a feed section of a polymerization reactor equipped with a continuously moving conveyor belt, and then, while maintaining a polymerization atmosphere temperature of 80°C, UV was irradiated with a UV irradiation device (dose: 10 mW/cm$^2$), and UV polymerization was progressed for 2 minutes, thus preparing hydrogel polymer.

The hydrogel polymer was transferred to a meat chopper and cut to 2 mm to 10 mm. Wherein, the moisture content of cut hydrogel polymer was 47 wt%. Subsequently, the hydrogel polymer was dried in a hot air dryer of 170°C for 30 minutes, and the dried hydrogel polymer was ground with a pin mill. Subsequently, polymers having a particle size range of 150 $\mu$m to 850 $\mu$m was classified with a sieve to prepare a base resin.

And then, before surface crosslinking, the base resin powders were mixed with zirconium phosphate. The zirconium phosphate was mixed such that the content became 2.0 parts by weight, based on 100 parts by weight of the base resin.

And then, to 100 parts by weight of the above-prepared base resin, a surface crosslinking solution (2.5 parts by weight of water, 0.1 parts by weight of ethyleneglycol diglycidyl ether(EX-810), 0.1 parts by weight of aluminum sulfate 18 hydrate(Al-S), and 0.1 parts by weight of silica(Aerosil A200)) and a tannin solution were uniformly mixed, and then, a surface crosslinking reaction was progressed at 140°C for 30 minutes. As the tannin solution, an aqueous solution with a tannin solid content of 5 parts by weight, based on 100 parts by weight of the solution, was used. The tannin solution was mixed in the solid content of 0.05 parts by weight, based on 100 parts by weight of base resin. After completing the surface treatment, by classification with a sieve, super absorbent polymer with a particle diameter range of 150 to 850 $\mu$m was obtained.

The obtained super absorbent polymer was mixed with an aqueous cysteine solution (cysteine concentration 13 wt%) and an aqueous CuI solution (CuI concentration 1 wt%) were mixed. Wherein, they were mixed such that the content of cysteine became 0.3 parts by weight, based on 100 parts by weight of base resin, and the content of CuI became 0.001 parts by weight, based on 100 parts by weight of base resin. And then, a drying step was conducted at 80°C for 25 minutes.

**Example 6**

100 g of acrylic acid, 0.37 g of N,N'-methylenebisacrylamide as a crosslinking agent, 0.15 g of sodium persulfate(SPS) as a thermal initiator, 0.008 g of benzoin ether as UV initiator, 40 g of caustic soda(NaOH), and 127 g of water were mixed, to prepare an aqueous monomer composition with a monomer concentration of 45.8 wt%. The aqueous monomer composition was introduced into a feed section of a polymerization reactor equipped with a continuously moving conveyor belt, and then, while maintaining a polymerization atmosphere temperature of 80°C, UV was irradiated with a UV irradiation device (dose: 10 mW/cm$^2$), and UV polymerization was progressed for 2 minutes, thus preparing hydrogel polymer.

The hydrogel polymer was transferred to a meat chopper and cut to 2 mm to 10 mm. Wherein, the moisture content of cut hydrogel polymer was 47 wt%. Subsequently, the hydrogel polymer was dried in a hot air dryer of 170°C for 30 minutes, and the dried hydrogel polymer was ground with a pin mill. Subsequently, polymers having a particle size range of 150 $\mu$m to 850 $\mu$m was classified with a sieve to prepare a base resin.

And then, to 100 parts by weight of the above-prepared base resin, a surface crosslinking solution (2.5 parts by weight of water, 0.1 parts by weight of ethyleneglycol diglycidyl ether(EX-810), 0.1 parts by weight of aluminum sulfate 18 hydrate(Al-S), and 0.1 parts by weight of silica(Aerosil A200)) was uniformly mixed, and then, a surface crosslinking reaction was progressed at 140°C for 30 minutes. After completing the surface treatment, by classification with a sieve, super absorbent polymer with a particle diameter range of 150 to 850 $\mu$m was obtained.

The obtained super absorbent polymer was mixed with an aqueous methionine solution (methionine concentration 13 wt%) and an aqueous CuI solution (CuI concentration 1 wt%) were mixed. Wherein, they were mixed such that the content of methionine became 0.15 parts by weight, based on 100 parts by weight of base resin, and the content of CuI became 0.01 parts by weight, based on 100 parts by weight of base resin. And then, a drying step was conducted at 80°C for 25 minutes.

**Example 7**

100 g of acrylic acid, 0.5 g of cetethyldimonium bromide as polymerizable antibacterial monomers, 0.37 g of N,N'-methylenebisacrylamide as a crosslinking agent, 0.15 g of sodium persulfate(SPS) as a thermal initiator, 0.008 g of benzoin ether as UV initiator, 40 g of caustic soda(NaOH), and 127 g of water were mixed, to prepare an aqueous monomer composition with a monomer concentration of 45.8 wt%. The aqueous monomer composition was introduced into a feed section of a polymerization reactor equipped with a continuously moving conveyor belt, and then, while

maintaining a polymerization atmosphere temperature of 80°C, UV was irradiated with a UV irradiation device (dose: 10 mW/$cm^2$), and UV polymerization was progressed for 2 minutes, thus preparing hydrogel polymer.

The hydrogel polymer was transferred to a meat chopper and cut to 2 mm to 10 mm. Wherein, the moisture content of cut hydrogel polymer was 47 wt%. Subsequently, the hydrogel polymer was dried in a hot air dryer of 170°C for 30 minutes, and the dried hydrogel polymer was ground with a pin mill. Subsequently, polymers having a particle size range of 150 $\mu$m to 850 $\mu$m was classified with a sieve to prepare a base resin.

And then, before surface crosslinking, the base resin powders were mixed with zirconium phosphate. The zirconium phosphate was mixed such that the content became 2.0 parts by weight, based on 100 parts by weight of the base resin.

And then, to 100 parts by weight of the above-prepared base resin, a surface crosslinking solution (2.5 parts by weight of water, 0.1 parts by weight of ethyleneglycol diglycidyl ether(EX-810), 0.1 parts by weight of aluminum sulfate 18 hydrate(Al-S), and 0.1 parts by weight of silica(Aerosil A200)) and a tannin solution were uniformly mixed, and then, a surface crosslinking reaction was progressed at 140°C for 30 minutes. As the tannin solution, an aqueous solution with a tannin solid content of 5 parts by weight, based on 100 parts by weight of the solution, was used. The tannin solution was mixed in the solid content of 0.05 parts by weight, based on 100 parts by weight of base resin. After completing the surface treatment, by classification with a sieve, super absorbent polymer with a particle diameter range of 150 to 850 $\mu$m was obtained.

The obtained super absorbent polymer was mixed with an aqueous cysteine solution (cysteine concentration 13 wt%) and an aqueous CuI solution (CuI concentration 1 wt%) were mixed. Wherein, they were mixed such that the content of cysteine became 0.6 parts by weight, based on 100 parts by weight of base resin, and the content of CuI became 0.01 parts by weight, based on 100 parts by weight of base resin. And then, a drying step was conducted at 80°C for 25 minutes.

[Table 1]

| | Sulfur-containing amino acid (based on 100 parts by weight of base resin) | Metal iodide salt (based on 100 parts by weight of base resin) | Polymerizab le antibacterial monomers (based on 100 parts by weight of acrylic acid-based monomers) | Tannin solution (concentr ation 5%) (based on 100 parts by weight of base resin) | Zirconium phosphate (based on 100 parts by weight of base resin) | Others |
|---|---|---|---|---|---|---|
| Examp le 1 | 0.1 | 0.02 | - | - | - | cysteine |
| Examp le 2 | 0.15 | 0.01 | - | - | - | cysteine |
| Examp le 3 | 0.3 | 0.001 | - | - | - | cysteine |
| Examp le 4 | 0.15 | 0.01 | 1.0 | 0.5 | 2.0 | cysteine |
| Examp le 5 | 0.3 | 0.001 | 0.5 | 0.5 | 2.0 | cysteine |
| Examp le 6 | 0.15 | 0.01 | - | - | - | methionine |
| Examp le 7 | 0.6 | 0.01 | 0.5 | 0.5 | 2.0 | cysteine |
| Compa rative Examp le 1 | - | - | - | - | - | |
| Compa rative Examp le 2 | 0.1 | - | - | - | - | cysteine |

(continued)

| | Sulfur-containing amino acid (based on 100 parts by weight of base resin) | Metal iodide salt (based on 100 parts by weight of base resin) | Polymerizab le antibacterial monomers (based on 100 parts by weight of acrylic acid-based monomers) | Tannin solution (concentr ation 5%) (based on 100 parts by weight of base resin) | Zirconium phosphate (based on 100 parts by weight of base resin) | Others |
|---|---|---|---|---|---|---|
| Compa rative Examp le 3 | - | 0.02 | - | - | - | |
| Compa rative Examp le 4 | - | - | - | - | - | Beta-cyclodextrin |
| Compa rative Examp le 5 | - | - | - | - | 2.0 | |
| Compa rative Examp le 6 | - | - | - | 0.5 | - | |

**Experimental Example**

For the compositions of super absorbent polymer prepared in Examples and Comparative Examples, the properties were measured as follows.

**1) Deodorization capacity**

Deodorization capacity was measured by an adsorption tube measurement method. As malodorous substances, diacetyl, 3-methylbutananl, and dimethyltrisulfide(DMTS) were selected and deodorization capacity was tested.

- Adsorption tube measurement method : Into a 500mL glass bottle, 1 g of super absorbent polymer was put, and then, 25mL of malodorous substance was introduced. And then, aging was progressed in a constant temperature chamber for 3 hours, followed by capturing for 20 minutes. Wherein, the temperature of the constant temperature chamber was 35°C, and $N_2$ flow rate was 230mL/min. The odor pushed out was then adsorbed to the connected adsorption tube, which was repeated twice per the same sample to capture. The result of capture was analyzed by GC and confirmed.
- Deodorization rate (%) = the amount of odor of Reference sample(super absorbent polymer of Comparative Example 1) measured by GC - the amount of odor of sample measured by GC / the amount of odor of Reference sample(super absorbent polymer of Comparative Example 1) measured by GC X 100(%)

**2) Centrifuge Retention Capacity (CRC)**

Centrifuge retention capacity of each polymer by absorption rate under no load was measured according to European Disposables and Nonwovens Association, (EDANA) standard EDANA WSP 241.3.

Specifically, from each polymer obtained through Examples and Comparative Examples, polymer classified to the particle diameter range of 300$\mu$m~500$\mu$m was obtained. $W_0$(g, about 0.2g) of such polymer was uniformly put in an envelope made of non-woven fabric, and the envelope was sealed, and then, dipped in a 0.9 wt% saline solution. After 30 minutes, the envelope was drained at 250G for 3 minutes using a centrifuge, and the weight $W_2$(g) of the envelope was measured. And, the same operation was conducted using an empty envelope without polymer, and then, the weight $W_1$(g) at that time was measured.

Using the weights thus obtained, CRC(g/g) was confirmed by the following Mathematical Formula 1.

[Mathematical Formula 1]

$$CRC\ (g/g) = \{[W_2(g) - W_1(g)]/W_0(g)\} - 1$$

**3) AUP: Absorbency under Pressure (AUP)**

For each super absorbent polymer of Examples and Comparative Examples, absorbency under pressure of 0.7 psi was measured according to EDANA method WSP 242.3.

First, when measuring absorbency under pressure, the classified polymer used to measure CRC was used.

Specifically, on the bottom of a plastic cylinder having an inner diameter of 25 mm, a 400 mesh wire netting made of stainless steel was installed. And, $W_0$(g) of the super absorbent polymer was uniformly scattered on the screen under conditions of room temperature and 50% humidity, and a piston capable of uniformly applying a load of 0.7 psi was put thereon, wherein a piston having an outer diameter slightly smaller than 25 mm was used such that there was no gap with the inner wall of the cylinder and the up and down movement was not hindered. At this time, the weight $W_3$(g) of the apparatus was measured.

Inside a petri dish having a diameter of 150mm, a glass filter having a diameter of 90mm and a thickness of 5mm was laid, and a 0.9 wt% saline solution was poured to the same level as the upper side of the glass filter. And, one piece of a filter paper having a diameter of 90 mm was laid thereon. And then, the above measurement apparatus was put on the filter paper, and the solution was absorbed under pressure for 1 hour. After 1 hour, the measurement apparatus was lifted, and the weight $W_4$(g) was measured. Using the obtained weights, absorbency under pressure(g/g) was calculated according to the following Mathematical Formula 2.

[Mathematical Formula 2]

$$AUP(g/g) = [W_4(g) - W_3(g)]/W_0(g)$$

The results of deodorization capacity were shown in Table 2, and the results of centrifuge retention capacity and absorbency under pressure were shown in Table 3.

The numerical values in Table 2 indicate deodorization efficiencies in comparison with Comparative Example 1, and the higher the deodorization efficiency is, the higher the numerical value is.

[Table 2]

| Deodorization efficiency (%) | Diacetyl | 3-methylbut anal | Dimethylt risulfide |
|---|---|---|---|
| Example 1 | 13 | 27 | 35 |
| Example 2 | 58 | 58 | 82 |
| Example 3 | 77 | 77 | 99 |
| Example 4 | 66 | 60 | 82 |
| Example 5 | 80 | 78 | 97 |
| Example 6 | 60 | 53 | 85 |
| Example 7 | 85 | 82 | 98 |
| Comparative Example 1 | 0 | 0 | 0 |
| Comparative Example 2 | 13 | 27 | 28 |
| Comparative Example 3 | 0 | 3 | 40 |
| Comparative Example 4 | 0 | 0 | 30 |
| Comparative Example 5 | 20 | 0 | 22 |
| Comparative Example 6 | 11 | 49 | 51 |

[Table 3]

| | CRC (g/g) | AUP (g/g) |
|---|---|---|
| Example 1 | 29.5 | 21.5 |
| Example 2 | 30.1 | 21.3 |
| Example 3 | 30.2 | 21.0 |
| Example 4 | 29.4 | 20.9 |
| Example 5 | 30.0 | 21.1 |
| Example 6 | 29.5 | 20.7 |
| Example 7 | 29.9 | 21.0 |
| Comparative Example 1 | 30.8 | 21.1 |
| Comparative Example 2 | 31.0 | 20.9 |
| Comparative Example 3 | 30.0 | 21.4 |
| Comparative Example 4 | 30.3 | 20.4 |
| Comparative Example 5 | 30.2 | 20.2 |
| Comparative Example 6 | 30.4 | 21.1 |

From the Table 2, it can be confirmed that Examples 1 to 7 have uniform and excellent deodorization capacity for malodorous substances of diacetyl, 3-methylbutanal, and dimethyltrisulfide, compared to Comparative Examples 1 to 6. And, from the Table 3, it can be confirmed that Examples 1 to 7 maintain a similar level of absorption capacity to those of Comparative Examples 1 to 6. Thus, it can be confirmed that the super absorbent polymer of the present disclosure has improved deodorization capacity without deterioration of absorption capacity.

## Claims

**1.** A composition of super absorbent polymer comprising:

super absorbent polymer comprising a base resin comprising crosslinked polymer in which acrylic acid-based monomers having at least partially neutralized acid groups and an internal crosslinking agent are crosslinked, and a surface crosslink layer formed on the surface of the base resin, in which the crosslinked polymer is additionally crosslinked by a surface crosslinking agent; and
sulfur-containing amino acid and metal iodide salt.

**2.** The composition of super absorbent polymer according to claim 1, wherein

the sulfur-containing amino acid is included in the content of 0.1 to 1.5 parts by weight, and
the metal iodide salt is included in the content of 0.001 to 0.05 parts by weight, based on 100 parts by weight of the base resin.

**3.** The composition of super absorbent polymer according to claim 1, wherein the sulfur-containing amino acid comprises one or more selected from the group consisting of cysteine, cystine, and methionine.

**4.** The composition of super absorbent polymer according to claim 1, wherein the base resin further comprises polymerizable antibacterial monomers as monomers.

**5.** The composition of super absorbent polymer according to claim 1, wherein zirconium phosphate is included in the content of 5.0 parts by weight or less, based on 100 parts by weight of the base resin.

**6.** The composition of super absorbent polymer according to claim 1, wherein the surface crosslink layer further comprises tannin solid in the content of 0.05 parts by weight or less, based on 100 parts by weight of the base resin.

7. A method for preparing a composition of superabsorbent polymer comprising steps of:

conducting crosslinking polymerization of acrylic acid-based monomers having at least partially neutralized acid groups, in the presence of an internal crosslinking agent and a polymerization initiator, to form hydrogel polymer (step 1);
preparing a base resin comprising crosslinked polymer by drying and grinding the hydrogel polymer (step 2);
mixing a surface crosslinking solution with the base resin to prepare a mixture (step 3);
heat treating the mixture to prepare super absorbent polymer in which a surface crosslink layer is formed on the surface of the base resin (step 4); and
mixing an aqueous solution comprising sulfur-containing amino acid and metal iodide salt with the super absorbent polymer (step 5).

8. The method for preparing a composition of super absorbent polymer according to claim 7, wherein in the step 5,

the sulfur-containing amino acid is mixed in the content of 0.1 to 1.5 parts by weight, and
the metal iodide salt is mixed in the content of 0.001 to 0.05 parts by weight, based on 100 parts by weight of the base resin.

9. The method for preparing a composition of super absorbent polymer according to claim 7, wherein the sulfur-containing amino acid comprises one or more selected from the group consisting of cysteine, cystine, and methionine.

10. The method for preparing a composition of super absorbent polymer according to claim 7, wherein, in the (step 1), polymerizable antibacterial monomers are further included.

11. The method for preparing a composition of super absorbent polymer according to claim 7, wherein, after the (step 2), further comprising a step of mixing zirconium phosphate.

12. The method for preparing a composition of super absorbent polymer according to claim 7, wherein the surface crosslinking solution of the (step 3) comprises a tannin solution.

13. The method for preparing a composition of super absorbent polymer according to claim 11, wherein the zirconium phosphate is mixed in the content of 5.0 parts by weight or less, based on 100 parts by weight of the base resin.

14. The method for preparing a composition of super absorbent polymer according to claim 12, wherein the tannin solution is included in the content of 1.0 parts by weight, based on 100 parts by weight of the base resin.

**INTERNATIONAL SEARCH REPORT**

International application No.
**PCT/KR2022/020322**

**A. CLASSIFICATION OF SUBJECT MATTER**

**C08K 5/372**(2006.01)i; **C08K 5/521**(2006.01)i; **C08K 3/16**(2006.01)i; **C08L 33/06**(2006.01)i; **C08J 3/24**(2006.01)i

According to International Patent Classification (IPC) or to both national classification and IPC

**B. FIELDS SEARCHED**

Minimum documentation searched (classification system followed by classification symbols)

C08K 5/372(2006.01); A01N 47/44(2006.01); A61L 9/01(2006.01); A61L 9/16(2006.01); C08F 2/32(2006.01); C08F 2/44(2006.01); C08G 73/10(2006.01); C09D 5/02(2006.01); C09D 5/14(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고흡수성 수지(superabsorbent polymer), 함수 겔 중합체(hydrogel polymer), 표면 가교제(surface crosslinking agent), 내부 가교제(internal crosslinking agent), 황 함유 아미노산(sulfur-containing amino acid), 요오드화 금속염(metal iodide salt)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2021-0058714 A (LG CHEM, LTD.) 24 May 2021 (2021-05-24)<br>See claims 1-7; and paragraphs [0033]-[0066]. | 1-14 |
| Y | US 8287631 B2 (BAUM, R. et al.) 16 October 2012 (2012-10-16)<br>See claim 1. | 1-14 |
| Y | JP 2005-312801 A (POLYPLASTICS CO.) 10 November 2005 (2005-11-10)<br>See paragraphs [0075]-[0102]. | 5-6,11-14 |
| A | JP 08-120011 A (NIPPON SYNTHETIC CHEM. IND. CO., LTD.) 14 May 1996 (1996-05-14)<br>See entire document. | 1-14 |
| A | KR 10-2001-0082336 A (MITSUI CHEMICALS, INC.) 29 August 2001 (2001-08-29)<br>See entire document. | 1-14 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 March 2023** | **24 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2022/020322**

| Patent document cited in search report | Publication date (day/month/year) | Patent family member(s) | Publication date (day/month/year) |
|---|---|---|---|
| KR 10-2021-0058714 A | 24 May 2021 | CN 114599696 A | 07 June 2022 |
| | | EP 4029375 A1 | 20 July 2022 |
| | | JP 2023-501130 A | 18 January 2023 |
| | | US 2022-0346379 A1 | 03 November 2022 |
| | | WO 2021-096230 A1 | 20 May 2021 |
| US 8287631 B2 | 16 October 2012 | EP 2216372 A1 | 11 August 2010 |
| | | EP 2216372 B1 | 04 June 2014 |
| | | US 2010-0186631 A1 | 29 July 2010 |
| JP 2005-312801 A | 10 November 2005 | CN 1692950 A | 09 November 2005 |
| | | CN 1692950 C | 10 December 2008 |
| | | EP 1595918 A1 | 16 November 2005 |
| | | EP 1595918 B1 | 06 August 2008 |
| | | JP 4568018 B2 | 27 October 2010 |
| JP 08-120011 A | 14 May 1996 | None | |
| KR 10-2001-0082336 A | 29 August 2001 | CN 100332765 A | 23 January 2002 |
| | | EP 1142925 A1 | 10 October 2001 |
| | | EP 1142925 A4 | 09 October 2002 |
| | | JP 2000-239378 A | 05 September 2000 |
| | | WO 00-39194 A1 | 06 July 2000 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210182480
- KR 1020220171681


### Non-patent literature cited in the description


- UV Coatings. **REINHOLD SCHWALM.** Basics, Recent Developments and New Application. Elsevier, 2007, 115
- **ODIAN.** Principle of Polymerization. Wiley, 1981, 203